# EUROPÄISCHE PATENTSCHRIFT

(11) **EP 3 663 178 B1**
(45) Veröffentlichungstag und Bekanntmachung des Hinweises auf die Patenterteilung: **20.07.2022**
(21) Anmeldenummer: 19213897.2
(22) Anmeldetag: 05.12.2019
(51) Int. Cl.: B62J 1/08, B62J 45/421, B62J 45/411, B62J 45/413

(54) **VERFAHREN ZUR ERMITTLUNG DER SATTELHÖHE EINES ZWEIRADS**
METHOD FOR DETERMINING THE SADDLE HEIGHT OF A BICYCLE
MÉTHODE DE DÉTERMINATION DE LA HAUTEUR DE LA SELLE D'UNE BICYCLETTE

(30) Priorität: 07.12.2018 DE 102018221197
(43) Veröffentlichungstag der Anmeldung: 10.06.2020
(73) Patentinhaber: Robert Bosch GmbH, 70442 Stuttgart (DE)
(72) Erfinder: Mehlo, Dennis, 72762 Reutlingen (DE); Thienel, Cornelius, 72768 Reutlingen (DE)

(56) Entgegenhaltungen:
- EP-A1- 2 689 996
- EP-A1- 2 962 909
- EP-A1- 3 260 325
- FR-A1- 3 024 866
- JP-A- 2018 024 411
- US-A1- 2010 248 905

## Beschreibung

### Stand der Technik

Die korrekte Einstellung der Sattelhöhe bei einem Fahrrad verhindert die falsche Belastung der Knie- und/oder Gelenkmuskulatur des Fahrers. Darüber hinaus wird durch eine falsche Einstellung der Sattelhöhe eine optimale bzw. effiziente Tretweise verhindert.

Bei auf dem Markt erhältlichen Fahrrädern, insbesondere bei Elektrofahrrädern, gibt es die Möglichkeit, parameterabhängig eine Verstellung der Sattelhöhe vorzunehmen.

Aus der DE 10110 887 A1 und der DE 20 2006 0101280 U1 sind so Höhenverstellungen bekannt, bei der der Fahrer während der Fahrt die Höhenposition des Sattels einstellen kann.

Aus der EP 2 540 606 A1 ist eine Höhenverstellung für ein Fahrrad bekannt, bei dem die Stellung des Sitzes eines Zweiradfahrzeugs mittels einer Stelleinheit in Abhängigkeit der Geschwindigkeit des Zweiradfahrzeugs selbsttätig eingestellt werden kann.

Weitere Schriften, die eine Verstellung des Sattels beschreiben sind die US 8 342 552 B1 und die DE 10 2016 109 158 A1.

Dokument US 2010/248905 A1 offenbart die Merkmale des Oberbegriffs der Ansprüche 1 und 4.

Mit der vorliegenden Erfindung soll erreicht werden, dass eine potentiell falsche Einstellung der Höhe der Sattelstütze erkannt und behoben wird.

### Offenbarung der Erfindung

Mit der vorliegenden Erfindung wird ein Verfahren sowie eine Vorrichtung beansprucht, die zur Einstellung eines Sattels eines Zweirads, insbesondere eines Fahrrads dient. Hierzu wird wenigstens eine aktuelle Einstellungsgröße des Sattels bestimmt, die beispielsweise die Höhe, die Verkippung und/oder die Neigung repräsentiert. Die aktuelle Einstellungsgröße wird dabei in Abhängigkeit des zeitlichen Verlaufs einer durch einen entsprechenden Sensor erfassten Tretkraftgröße bestimmt, die durch den Fahrer mittels seiner auf die Tretkurbel aufgebrachten Tretkraft erzeugt wird.

Durch eine derartige Erfassung der Tretkraft kann das Verhalten des Fahrers während des Tretens analysiert werden, um ungleiche Betätigungen zu erkennen. Diese ungleiche Betätigung ist ein Indiz für einen falsch eingestellten Sattel, so dass der Fahrer seine Tretkraft nicht optimal einsetzen kann. Vorteilhafterweise wird die Tretkraftgröße wenigstens während einer halben Umdrehung der Tretkurbel erfasst, um daraus die aktuelle Einstellungsgröße des Sattels zu bestimmen. Besonders vorteilhaft ist die Erfassung von wenigstens einer ganzen Umdrehung der Tretkurbel, so dass sichergestellt ist, dass die Betätigung beider Pedale erfasst werden. Es können jedoch auch die Tretkraftgrößen während mehrerer Umdrehungen zur Bestimmungen der aktuellen Einstellungsgröße des Sattels verwendet werden. Hierbei wäre dann eine Mittelung der Werte vorzunehmen, so dass einzelne Ausreißer durch Sondereffekte herausgefiltert werden.

In der Ausführung ist vorgesehen, dass die aktuelle Einstellungsgröße mit einer optimalen Einstellungsgröße des Sattels verglichen wird. Die Abweichungen dieses Vergleiches können als Grundlage für eine Änderung der Einstellung des Sattels verwendet werden. Dies kann beispielsweise selbsttätig durch eine Aktuatorik am Sattel geschehen. Alternativ kann dem Fahrer auch eine Information angezeigt werden, z.B. auf einem entsprechendem Display am Fahrrad oder auf einem Smartphone, dass eine Änderung der Satteleinstellungen vorgenommen werden soll. Hierbei kann auf dem Display oder dem Smartphone auch eine konkrete Anleitung abgebildet werden. Optional kann vorgesehen sein, dass diese Änderung der Einstellung des Sattels nur dann vorgenommen oder vorgeschlagen wird, wenn die Abweichungen ausreichend gravierend sind, d.h. einen Schwellenwert überschreiten.

Weitere Vorteile ergeben sich aus der nachfolgenden Beschreibung von Ausführungsbeispielen bzw. aus den abhängigen Patentansprüchen.

### Kurze Beschreibung der Zeichnungen

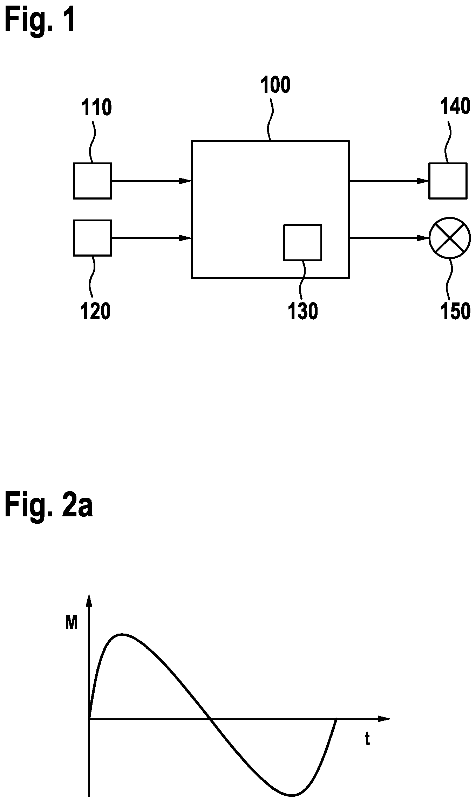

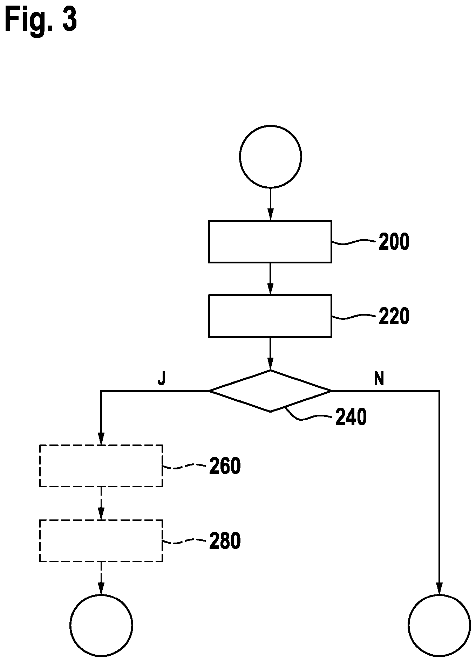

Die Figur 1 stellt schematisch eine erfindungsgemäße Vorrichtung zur Erfassung von Sensorgrößen und einer Ableitung von Stellgrößen zur Einstellung eines Sattels dar. In den Figuren 2a bis 2c sind beispielhafte Verläufe der erfassten Drehmomentgrößen bei unterschiedlichen Sattelpositionen dargestellt. Das Flussdiagramm der Figur 3 zeigt eine mögliche Realisierung des erfindungsgemäßen Verfahrens.

### Ausführungsformen der Erfindung

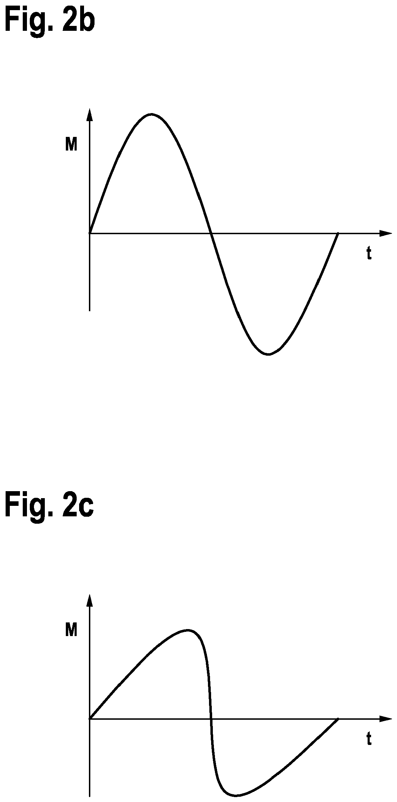

Zur Bestimmung der aktuellen Sattelhöhe des Fahrers eines Fahrrads, z.B. eines Elektrofahrrads, können die Sensordaten von am Fahrrad vorhanden Sensoren verwendet werden. So kann beispielsweise die Sattelhöhe aus der Tretkraft und dem Tretwinkel bestimmt werden. Hierzu kann die Tretkraft bzw. der Tretwinkel über die Aufnahme des an der Tretkurbel anliegenden Drehmoments erkannt werden. Es ist jedoch auch möglich die Tretkraft über Piezoelemente bzw. Drucksensoren in den Pedalen und die Tretwinkel über einen entsprechend auflösenden Drehzahlsensor zu erfassen. Durch eine Betrachtung des (Tret-)Drehmomentverlaufs können Rückschlüsse auf die Sattelhöhe gezogen werden. So ist bei einer falschen Sattelhöhe der Drehmomentverlauf langfristig nicht mittig angeordnet, wie es beispielhaft in den Figuren 2a und 2c gezeigt wird. Bei dem Drehmomentverlauf gemäß der Figur 2a ist die Sattelstütze und somit der Sattel zu hoch eingestellt, so dass das Maximalmoment zu früh aufgebracht wird. Bei dem Drehmomentverlauf gemäß der Figur 2c ist zu erkennen, dass das Maximalmoment zu spät aufgebracht wird, woraus sich eine Einstellung der Sattelstütze ergibt, die zu niedrig ist. Beide Einstellungen (zu hoch, zu niedrig) führen zu einem ineffizienten Fahrverhalten sowie einer ungesunden Belastung.

Der Drehmomentverlauf gemäß der Figur 2b zeigt hingegen eine optimale Einstellung der Sattelstütze, so dass sich ein runder Tritt mit einem gleichmäßigen Verlauf des Tretdrehmoments ergibt. Durch diese optimale Einstellung des Sattels in Bezug auf die Körpergröße des Fahrers ergibt sich ein effizientes Fahrverhalten und eine gesunde Belastung.

Zur Bestimmung der aktuellen Sattelhöhe und zur Ableitung von Einstellungen zur Erreichung der optimalen Einstellung der Sattelstütze ist eine Vorrichtung 100 vorgesehen, z.B. eine Verarbeitungseinheit, die die Sensorgrößen eines Tretkraftsensors oder eines Drehmomentsensors 110 erfasst (siehe Figur 1). Optional oder zusätzlich können auch Sensordaten eines Tretwinkelsensors 120, z.B. eines Drehzahlsensors, erfasst werden. Der Tretwinkel kann jedoch ebenfalls aus den Sensorgrößen bzw. Sensordaten des Drehmomentsensors 110 abgeleitet werden. Basierend auf den so erfassten Sensorgrößen wird in der Vorrichtung 100 die aktuelle Sattelhöhe bzw. die aktuelle Einstellung der Sattelstütze bestimmt. Anschließend wird auf der Basis von abgespeicherten Werten oder Erfahrungsdaten im Speicher 130 in der Vorrichtung 100 eine optimale Einstellung des Sattels bzw. der Sattelstütze abgeleitet. Diese abgespeicherten Werte können beispielsweise Einstellungen der Sattelstütze in Abhängigkeit der Körpergröße berücksichtigen, so dass ein Fahrer die entsprechenden Einstellungen einmalig oder jeweils vor der Fahrt auswählen kann. Zur Umsetzung der optimalen Einstellungen kann von der Vorrichtung 100 eine entsprechende Empfehlung an den Fahrer abgegeben werden, z.B. über eine optische Anzeige 150 in Form eines Displays. Alternativ oder zusätzlich kann auch eine automatische Sattelstützeinstellung 140 mittels eines entsprechenden Aktors angesteuert werden, um die optimale Einstellung umzusetzen. Diese automatische Einstellung kann optional auch derart gestaltet sein, dass sie erst in Gang gesetzt wird, wenn der Fahrer ein entsprechendes Freigabekommando gegeben hat.

Eine Umsetzung des erfindungsgemäßen Verfahren ist anhand des Flussdiagramms in Figur 3 dargestellt. Nach dem Start des Verfahrens werden in einem ersten Schritt 200 alle notwendigen Sensordaten erfasst, um eine Bestimmung der aktuellen Einstellung der Sattelstütze zu ermöglichen. Diese Erfassung kann dabei auch permanent separat durchgeführt werden, um jeweils aktuelle Sensordaten zur Verfügung zu haben. Zur Bestimmung der aktuellen Einstellung der Sattelstütze bzw. des Sattels sind erfindungsgemäß Sensordaten notwendig, die die vom Fahrer aufgebrachte Tretkraft, z.B. in Form des vom Fahrer aufgebrachten Tret-Drehmoments in Abhängigkeit der Zeit repräsentieren. Darüber hinaus können jedoch auch noch Tret-Drehwinkelgrößen erfasst werden, um das zeitliche Tretverhalten zu detektieren. Im nächsten Schritt 200 erfolgt eine Bestimmung der aktuellen Höhe der Sattelstütze auf der Basis der erfassten Sensordaten. Hierzu können beispielsweise die Maximalwerte des Drehmoments eines Umlaufs der Tretkurbel in Relation zu den Nulldurchgängen berücksichtigt werden. Optional kann auch vorgesehen sein, die Mittelwerte von mehreren Umläufen zu verwenden. Dabei stellt ein Maximalwert eine Situation dar, in der sich die Pedale am höchsten oder niedrigsten Punkt befindet, so dass kein Fahrer-Drehmoment mehr erzeugt werden kann. Die Nulldurchgänge repräsentieren dabei eine waagerechte Ausrichtung der Pedale. Wie aus den Figuren 2a bis 2c ableitbar ist, kann aus der Relation der Maximalwerte in Bezug auf die Nulldurchgänge sowie generell aus dem Verlauf des Drehmoments während einer Kurbeldrehung auf die Höhe der Sattelstütze bzw. deren Ausrichtung geschlossen werden. Im nachfolgenden Schritt 240 wird nach der Bestimmung der aktuellen Höhe der Sattelstütze bzw. deren Ausrichtung geprüft, ob die Abweichung zu einer abgespeicherten optimalen Höhe der Sattelstütze innerhalb eines Toleranzbereichs liegt. Wird dabei erkannt, dass die Einstellung der Sattelhöhe der optimalen Einstellung entspricht oder die Abweichung derart minimal ist, dass eine Änderung keine nennenswerte Verbesserung der Effizienz oder Belastung des Fahrers erreichen würde, wird das Verfahren beendet. Ist die Abweichung jedoch ausreichend groß, so dass eine Änderung der Einstellung zu einer Erhöhung der Effizienz des Fahrverhaltens sowie zu einer gesünderen Belastung des Fahrradfahrers führen würde, kann in einem nächsten optionalen Schritt 260 der Fahrer über eine Änderung der Einstellung informiert werden. Hierzu kann beispielsweise auf einem Display angezeigt werden, dass der Sattel neu eingestellt werden sollte. Alternativ oder zusätzlich kann hierbei auch konkret die Änderung der Einstellungen angezeigt werden, um den Vorgang für den Fahrer zu erleichtern. Optional kann auch vorgesehen sein, dem Fahrer die Möglichkeit zu geben, eine im nächsten Schritt 280 vorgesehenen automatischen Einstellung der Sattelhöhe bzw. der Ausrichtung des Sattels zuzustimmen. Der eben erwähnte Schritt 280 kann dabei ebenfalls optional vorgesehen sein, da hierzu am Sattel oder an der Sattelstütze entsprechende Mittel vorhanden sein müssen, die eine Änderung der Einstellungen ermöglichen. In diesem Fall könnte das Verfahren automatisch oder nach Bestätigung durch den Fahrer die Sattelstütze bzw. den Sattel selbsttätig in die optimalen Einstellungspositionen bringen. Anschließend kann das Verfahren beendet werden.

Bei der Festlegung einer optimalen Einstellung der Höhe der Sattelstütze kann davon ausgegangen werden, dass es eine einheitliche Einstellung gibt, die für alle Fahrsituationen gilt. Alternativ kann auch vorgesehen sein, dass die optimale Einstellung der Höhe der Sattelstütze bzw. des Sattels je nach erkannter Fahrsituation erfolgt. Hierzu wäre dann erforderlich, dass die Fahrsituationen erkannt werden und für jede Fahrsituation im Speicher 130 entsprechende Einstellungen hinterlegt sind.

Die vorliegende Erfindung zielt auf eine Erkennung einer potentiellen Fehleinstellung der Höhe der Sattelstütze über die systematische Auswertung von vorhandenen Sensordaten ab. Hierbei wird angenommen, dass eine einzelne korrekte dauerhafte Zieleinstellung unabhängig von der Fahrsituation existiert.

Die Ableitung der aktuellen Höhe der Sattelstütze kann alternativ auch über die Aufnahme und Bewertung einer Kennlinie Drehmoment über Drehwinkel des Pedals erfolgen, welche im Tretlager aufgezeichnet wird. Bei Stellung eines Pedals am höchsten (niedrigsten) Punkt, d.h. am Totpunkt, wird kein Drehmoment aufgeprägt und die Kennlinie berührt die X-Achse. Somit kann eindeutig in einem Bereich zwischen zwei Totpunkten ein Maximum des Drehmomentes sowie dessen zugehöriger Drehwinkel festgestellt werden. Als Schwellenwert für die positive Bewertung (Einstellung der Sattelstütze = Zieleinstellung) kann die Mitte zwischen zwei Totpunkten +- Toleranzbreite herangezogen werden. Liegt das Maximum des Drehmoments außerhalb des Toleranzbereiches und näher am rechten Totpunkt, so ist die Sattelstütze zu niedrig eingestellt. Liegt das Maximum des Drehmoments außerhalb des Toleranzbereiches und näher am linken Totpunkt, so ist die Sattelstütze zu hoch eingestellt. Die Art der Fehleinstellung kann an den Fahrer, z.B. über ein Display zurückgemeldet werden. Auch eine richtige Einstellung kann zurückgemeldet werden. Optional kann die Überprüfung der Höhe der Sattelstütze vom Nutzer manuell getriggert werden, oder eine Messung nur bei flachem Geländegang stattfinden. Hierzu können Daten eines Neigungssensors ausgewertet werden.

Eine automatische Einstellung der Sattelhöhe wird nicht situationsbezogen vorgenommen. Eine dynamische, kurzfristige Korrektur der Fahrradeinstellung soll nicht vorgenommen werden. Stattdessen soll eine langfristige Anpassung auf die optimal ergonomische Sattelhöhe erfolgen. Diese Einstellung könnte automatisch vorgenommen werden.

## Patentansprüche

1. Verfahren zur Bestimmung einer Änderungsgröße zur Einstellung des Sattels an einem Zweirad, wobei zur Bestimmung Änderungsgröße
• Tretkraftgrößen erfasst werden, die die Tretkraft des Fahrers auf die Tretkurbel des Zweirads repräsentieren, und
• eine aktuelle Einstellungsgröße des Sattels, insbesondere deren Höhe, in Abhängigkeit von dem zeitlichen Verlauf der Tretkraftgrößen bestimmt werden, und
• die wenigstens aktuelle Einstellungsgröße mit einer optimalen Einstellungsgröße verglichen wird, **dadurch gekennzeichnet dass**
• in Abhängigkeit des Vergleichs eine Änderungsgröße der Einstellungen des Sattels erzeugt wird,
wobei in Abhängigkeit der Überschreitung eines Schwellenwerts durch die Änderungsgröße
• ein dem Sattel zugeordneter Aktuator angesteuert wird, der die Einstellung des Sattels und somit die neu zu erfassende aktuelle Einstellungsgröße derart verändert, dass die Abweichung zwischen optimaler und aktueller Einstellungsgröße verringert wird, und/oder
• dem Fahrer des Zweirads eine erforderliche Änderung der Einstellung des Sattels mitgeteilt wird, insbesondere durch eine optische Anzeige (150).

2. Verfahren nach Anspruch 1, **dadurch gekennzeichnet, dass** zur Bestimmung der aktuellen Einstellungsgröße der zeitliche Tretkraftverlauf mittels der Tretkraftgrößen während wenigstens einer halben Umdrehung der Tretkurbel des Zweirads erfasst wird, wobei insbesondere vorgesehen ist, dass im Wesentlichen wenigstens eine Umdrehung der Tretkurbel des Zweirads erfasst wird.

3. Verfahren nach Anspruch 1 oder 2, **dadurch gekennzeichnet, dass** zur Bestimmung der aktuellen Einstellungsgröße eine Mittelung der erfassten Tretkraftgrößen erfolgt, wobei insbesondere eine Mittelung der Tretkraftgrößen erfolgt, die während wenigstens zwei Umdrehungen der Tretkurbel erfasst werden.

4. Vorrichtung (100) zur Bestimmung einer Änderungsgröße zur Einstellung des eines Sattels an einem Zweirad, insbesondere nach einem Verfahren nach einem der Ansprüche 1 bis 5, wobei die Vorrichtung zur Bestimmung der Änderungsgröße
• Sensorgrößen erfasst, die die Tretkraft des Fahrers des Zweirads repräsentieren, und
• in Abhängigkeit von dem zeitlichen Verlauf der Sensorgrößen eine aktuelle Einstellungsgröße des Sattels erzeugt, insbesondere dessen Höhe, und
• die wenigstens aktuelle Einstellungsgröße mit einer optimalen Einstellungsgröße vergleicht, **dadurch gekennzeichnet dass**
• in Abhängigkeit des Vergleichs eine Änderungsgröße der Einstellungen des Sattels erzeugt,
wobei in Abhängigkeit der Überschreitung eines Schwellenwerts durch die Änderungsgröße die Vorrichtung (100)
• ein dem Sattel zugeordneter Aktuator ansteuert, der die Einstellung des Sattels und somit die neu zu erfassende aktuelle Einstellungsgröße derart verändert, dass die Abweichung zwischen optimaler und aktueller Einstellungsgröße verringert wird, und/oder
• dem Fahrer des Zweirads eine erforderliche Änderung der Einstellung des Sattels mitteilt, insbesondere durch eine optische Anzeige (150).

5. Vorrichtung nach Anspruch 6, **dadurch gekennzeichnet, dass** die Vorrichtung zur Bestimmung der aktuellen Einstellungsgröße den zeitlichen Tretkraftverlauf mittels der Tretkraftgrößen während wenigstens einer halben Umdrehung der Tretkurbel des Zweirads erfasst, wobei insbesondere vorgesehen ist, dass im Wesentlichen wenigstens eine Umdrehung der Tretkurbel des Zweirads erfasst wird.

6. Vorrichtung nach Anspruch 6 oder 7, **dadurch gekennzeichnet, dass** die Vorrichtung zur Bestimmung der aktuellen Einstellungsgröße eine Mittelung der erfassten Tretkraftgrößen durchführt, wobei insbesondere eine Mittelung der Tretkraftgrößen erfolgt, die während wenigstens zwei Umdrehungen der Tretkurbel erfasst werden.

## Claims

1. Method for determining a change variable for setting the saddle on a two-wheeled vehicle, wherein, for determining the change variable,
• pedal-force variables that represent the pedal force of the rider on the pedal crank of the two-wheeled vehicle are detected, and
• a current setting variable of the saddle, in particular the height thereof, is determined in dependence on the variation over time of the pedal-force variables, and
• the at least current setting variable is compared with an optimum setting variable, **characterized in that**
• in dependence on the comparison, a change variable of the settings of the saddle is generated,
wherein, in dependence on the exceeding of a threshold value by the change variable,
• an actuator which is assigned to the saddle and changes the setting of the saddle, and consequently the current setting variable to be newly detected, in such a way that the deviation between the optimum setting variable and the current setting variable is reduced is activated, and/or
• the rider of the two-wheeled vehicle is notified of a required change in the setting of the saddle, in particular by an optical display (150).

2. Method according to Claim 1, **characterized in that**, for determining the current setting variable, the variation over time of the pedal force is detected by means of the pedal-force variables during at least half a revolution of the pedal crank of the two-wheeled vehicle, wherein it is provided in particular that essentially at least one revolution of the pedal crank of the two-wheeled vehicle is detected.

3. Method according to Claim 1 or 2, **characterized in that**, for determining the current setting variable, an averaging of the detected pedal-force variables is performed, wherein averaging of the pedal-force variables that are detected during at least two revolutions of the pedal crank is performed in particular.

4. Device (100) for determining a change variable for setting the saddle on a two-wheeled vehicle, in particular by a method according to one of Claims 1 to 5, wherein the device for determining the change variable
• detects sensor variables that represent the pedal force of the rider of the two-wheeled vehicle, and
• in dependence on the variation over time of the sensor variables, generates a current setting variable of the saddle, in particular the height thereof, and
• compares the at least one current setting variable with an optimum setting variable, **characterized in that**
• in dependence on the comparison, it generates a change variable of the settings of the saddle,
wherein, in dependence on the exceeding of a threshold value by the change variable, the device (100)
• activates an actuator which is assigned to the saddle and changes the setting of the saddle, and consequently the current setting variable to be newly detected, in such a way that the deviation between the optimum setting variable and the current setting variable is reduced, and/or
• the rider of the two-wheeled vehicle is notified of a required change in the setting of the saddle, in particular by an optical display (150).

5. Device according to Claim 6, **characterized in that** the device for determining the current setting variable detects the variation over time of the pedal force by means of the pedal-force variables during at least half a revolution of the pedal crank of the two-wheeled vehicle, wherein it is provided in particular that essentially at least one revolution of the pedal crank of the two-wheeled vehicle is detected.

6. Device according to Claim 6 or 7, **characterized in that** the device for determining the current setting variable carries out an averaging of the detected pedal-force variables, wherein an averaging of the pedal-force variables that are detected during at least two revolutions of the pedal crank is performed in particular.

## Revendications

1. Procédé permettant de déterminer une grandeur de modification pour le réglage de la selle sur un deux-roues, dans lequel, pour la détermination de la grandeur de modification
• des grandeurs de force de pédalage sont détectées qui représentent la force de pédalage du conducteur sur la manivelle de pédalier du deux-roues, et
• une grandeur de réglage actuelle de la selle, en particulier sa hauteur, est déterminée en fonction de la courbe de temps des grandeurs de force de pédalage, et
• au moins la grandeur de réglage actuelle est comparée avec une grandeur de réglage optimale, **caractérisé en ce que**
• une grandeur de modification des réglages de la selle est générée en fonction de la comparaison,
dans lequel, en fonction du dépassement d'une valeur seuil par la grandeur de modification,
• un actionneur associé à la selle est piloté qui modifie le réglage de la selle et donc la grandeur de réglage actuelle à détecter à nouveau de telle sorte que l'écart entre la grandeur de réglage optimale et la grandeur de réglage actuelle diminue, et/ou
• une modification nécessaire du réglage de la selle est communiquée au conducteur du deux-roues, en particulier par un affichage optique (150).

2. Procédé selon la revendication 1, **caractérisé en ce que** pour la détermination de la grandeur de réglage actuelle, la courbe de temps de la force de pédalage est détectée au moyen des grandeurs de force de pédalage pendant au moins un demi tour de la manivelle de pédalier du deux-roues, dans lequel il est prévu en particulier que substantiellement au moins un tour de la manivelle de pédalier du deux-roues soit détecté.

3. Procédé selon la revendication 1 ou 2, **caractérisé en ce que** pour la détermination de la grandeur de réglage actuelle, une communication des grandeurs de force de pédalage détectées est effectuée, dans lequel en particulier une communication des grandeurs de force de pédalage qui sont détectées pendant au moins deux tours de la manivelle de pédalier est effectuée.

4. Dispositif (100) permettant de déterminer une grandeur de modification pour le réglage de la selle sur un deux-roues, en particulier selon un procédé selon l'une quelconque des revendications 1 à 5, dans lequel le dispositif de détermination de la grandeur de modification
• détecte des grandeurs de capteur qui représentent la force de pédalage du conducteur du deux-roues, et
• génère en fonction de la courbe de temps des grandeurs de capteur une grandeur de réglage actuelle de la selle, en particulier sa hauteur, et
• compare ladite au moins une grandeur de réglage actuelle avec une grandeur de réglage optimale, **caractérisé en ce que**
• en fonction de la comparaison, il génère une grandeur de modification des réglages de la selle,
dans lequel, en fonction du dépassement d'une valeur seuil par la grandeur de modification, le dispositif (100)
• pilote un actionneur associé à la selle et qui modifie le réglage de la selle et donc la grandeur de réglage actuelle à détecter à nouveau de telle sorte que l'écart entre la grandeur de réglage optimale et la grandeur de réglage actuelle diminue, et/ou
• communique au conducteur du deux-roues une modification nécessaire du réglage, en particulier par un affichage optique (150).

5. Dispositif selon la revendication 6, **caractérisé en ce que** le dispositif détecte pour la détermination de la grandeur de réglage actuelle la courbe de temps de la force de pédalage au moyen des grandeurs de force de pédalage pendant au moins un demi tour de la manivelle de pédalier du deux-roues, dans lequel il est prévu en particulier que substantiellement au moins un tour de la manivelle de pédalier du deux-roues soit détecté.

6. Dispositif selon la revendication 6 ou 7, **caractérisé en ce que** le dispositif de détermination de la grandeur de réglage actuelle effectue une communication des grandeurs de force de pédalage détectées, dans lequel en particulier une communication des grandeurs de force de pédalage qui sont détectées pendant au moins deux tours de la manivelle de pédalier est effectuée.
